# FASCICULE DE BREVET EUROPEEN

(11) **EP 2 652 430 B1**
(45) Date de publication et mention de la délivrance du brevet: **29.05.2019**
(21) Numéro de dépôt: 11802060.1
(22) Date de dépôt: 16.12.2011
(51) Int. Cl.: F41G 3/14, F41G 7/22, G01S 3/784, G01S 17/66, G01S 17/00, G01S 7/487

(54) **PROCÉDÉ ET SYSTÈME DE DÉTECTION D'UN TRAIN D'IMPULSIONS ÉLECTROMAGNÉTIQUES, DISPOSITIF DE GUIDAGE ÉLECTROMAGNÉTIQUE D'UNE MUNITION VERS UNE CIBLE COMPRENANT UN TEL SYSTÈME DE DÉTECTION**
VERFAHREN UND SYSTEM ZUR ERKENNUNG EINES ELEKTROMAGNETISCHEN IMPULSSTROMS UND VORRICHTUNG MIT EINEM SOLCHEN DETEKTIONSSYSTEM SOWIE ZUR ELEKTROMAGNETISCHEN LEITUNG EINER MUNITION ZU EINEM ZIEL
METHOD AND SYSTEM FOR DETECTING A STREAM OF ELECTROMAGNETIC PULSES, AND DEVICE INCLUDING SUCH A DETECTION SYSTEM AND INTENDED FOR ELECTROMAGNETICALLY GUIDING AMMUNITION TOWARD A TARGET

(30) Priorité: 16.12.2010 FR 1004914
(43) Date de publication de la demande: 23.10.2013
(73) Titulaire: THALES, 92200 Neuilly-sur-Seine (FR)
(72) Inventeur: PERRUCHOT, Ludovic, F-78995 Elancourt Cedex (FR); LONJARET, Hervé, F-78995 Elancourt Cedex (FR); BECHE, Arnaud, F-78995 Elancourt Cedex (FR)
(74) Mandataire: Lavoix
(86) Numéro de dépôt international: PCT/EP2011/073106
(87) Numéro de publication internationale: WO 2012/080492

(56) Documents cités:
- EP-A1- 0 633 457
- EP-A1- 0 833 168
- US-A- 5 703 639

## Description

La présente invention concerne un procédé de détection d'un train d'impulsions électromagnétiques émises suivant une loi d'occurrence prédéfinie dans une scène d'observation par un opérateur au moyen d'un système de détection d'un train d'impulsions électromagnétiques comportant un détecteur matriciel de signaux et une unité de traitement des signaux, les signaux comportant les impulsions électromagnétiques, le procédé comprenant les étapes suivantes :
- acquisition des signaux par le détecteur matriciel et transmission des signaux du détecteur matriciel vers l'unité de traitement, et
- calcul par l'unité de traitement d'un signal de soustraction pour chaque pixel du détecteur matriciel, le signal de soustraction étant la différence entre deux signaux acquis sur deux fenêtres temporelles consécutives de même longueur, ce calcul de soustraction étant réalisé pour toute paire de signaux consécutifs.

L'invention concerne en outre un système de détection d'un train d'impulsions électromagnétiques associé au procédé et un dispositif de guidage électromagnétique d'une munition vers une cible comprenant un tel système de détection.

L'invention s'applique au domaine des systèmes optroniques de détection des impulsions électromagnétiques. Ces systèmes équipent notamment les plateformes aériennes (avions de transport, avions de combat, drones et hélicoptères), les plateformes maritimes et les plateformes terrestres (fantassins, blindés, transport de troupes, etc.) destinées à la surveillance et/ou au combat ainsi que les missiles ou bombes guidés laser.

En particulier, l'invention est destinée à des systèmes notamment du type systèmes infrarouge de détection de tâche laser (DTL ou LST en anglais pour *"Laser spot tracking"*), les pods de désignation laser (PDL) ou les dispositifs auto-directeurs (AD) de missile ou bombe guidé laser. Ces systèmes reposent sur des technologies de traitement de l'image qui détectent des impulsions électromagnétiques localisées, de préférence des impulsions laser.

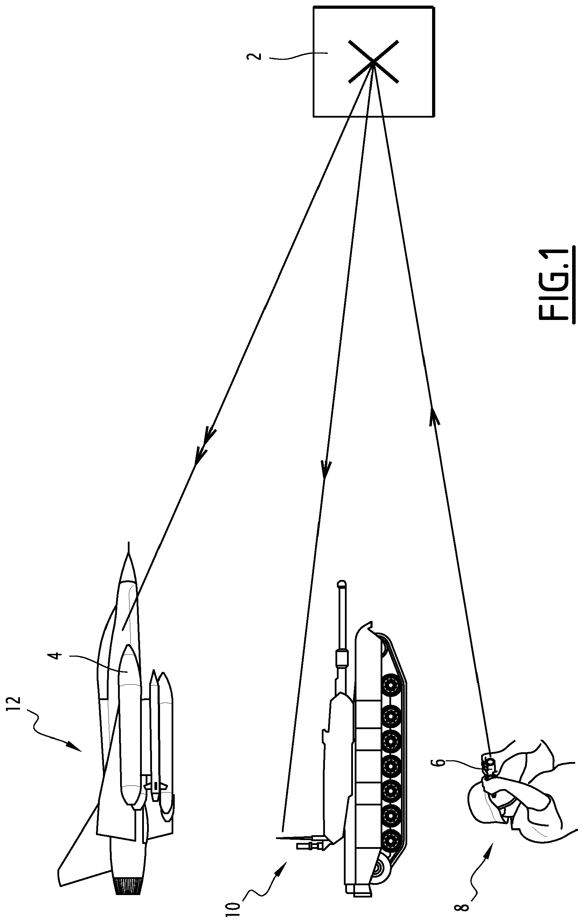

Par exemple, la figure 1 illustre un exemple d'application de l'invention mettant en jeu différents acteurs : un fantassin équipé de jumelles, un char, et un avion équipé d'un missile ou dune bombe. Le fantassin au sol désigne à une flotte aéroportée de soutien une cible à traiter, par exemple à éliminer par la flotte. Pour cela, le fantassin désigne la cible grâce à un désignateur laser qui comprend une source laser adaptée pour illuminer la cible afin de guider une munition ou arme, telle qu'une bombe ou missile, ou de faciliter la visée d'une arme ou munition légère. Les désignateurs laser fournissent ainsi des informations utiles pour le ciblage des munitions à guidage laser, telles que des missiles ou des bombes. De telles munitions aériennes comportent un dispositif dit auto-directeur comprenant un système de détection de la tache ou spot laser et des moyens de mesure (écartomètre) de l'écart ou erreur entre la cible et la trajectoire de la munition. Ainsi, ces munitions aériennes détectent la tache ou spot laser dont la fréquence est très spécifique et calent leur trajectoire sur cette tache. Grâce à des algorithmes de détection de tache laser, puis d'asservissement de la trajectoire sur la tache laser détectée, la munition atteint la cible avec une très haute précision, par exemple inférieure à 1 m.

Il est nécessaire pour la flotte aéroportée de connaître la position précise de la cible, puisque le cône de réception d'une bombe est limité.

Pour détecter ces trains d'impulsions électromagnétiques, il existe des détecteurs d'impulsions, dits détecteurs à quadrants. Ce type de détecteur fonctionne en continu. La tache ou spot des impulsions électromagnétiques sur la cible est imagée sur le détecteur à quadrants. Puis un seuillage est réalisé afin de détecter le signal utile par rapport au bruit par des moyens de traitement des signaux acquis par les détecteurs à quadrants. Ceux-ci calculent ensuite le poids respectif de l'image de la tache d'illumination sur chaque quadrant, c'est-à-dire la proportion de l'image de la tache d'illumination sur chaque quadrant.

Un tel détecteur à quadrants est connecté à des moyens de traitement des informations transmises par celui-ci, calculant par exemple le rapport des poids sur chaque quadrant de la tache d'illumination. Ces moyens de traitement permettent de calculer la direction de la cible que doit suivre une munition ou arme guidée pour l'atteindre. Pour cela, à partir des informations de direction, les moyens de navigation de la munition connectés aux moyens de traitement cherchent à équilibrer les signaux sur l'ensemble des quadrants, ce qui revient à centrer la ligne de visée sur la cible.

Un dispositif de guidage laser d'un missile vers la cible comporte de tels détecteurs à quadrants et moyens de traitement des informations afin de transmettre, par exemple au missile, la direction à suivre jusqu'à la cible.

Un inconvénient d'un tel dispositif est que la précision dépend de la localisation de la cible dans le champ de vision et n'est pas constante sur tout le champ de vision. Ainsi elle peut être excellente au centre du champ mais médiocre en bord de champ de vision.

Afin d'augmenter la précision du guidage, les détecteurs d'impulsions électromagnétiques comportent des détecteurs matriciels ayant davantage de pixels qu'un détecteur à quadrants, par exemple 100 pixels x 100 pixels.

Pour de tels dispositifs, la tache correspondant à une impulsion d'illumination est imagée sur un unique pixel du détecteur ou sur quatre pixels, améliorant ainsi sa précision de localisation. Dans ce cas, ces dispositifs ne comportent pas d'étapes de pesée et donnent directement la localisation du pixel imageant la tache d'illumination et par conséquent la direction de la cible.

Par contre, ces détecteurs ont un temps d'intégration sensiblement égal à la milliseconde et fonctionnent à 1 kHz, entraînant ainsi une augmentation du bruit dans le signal détecté.

Par conséquent, ce type de détecteur est moins performant en termes de rapport signal sur bruit mais a un champ de vision instantanée (IFOV pour *"Instantaneous Field of View",* en anglais) bien meilleur que les détecteurs à quadrants.

Les documents EP 0 633 457 A1, EP 0 833 168 A1 et US 5 703 639 A, divulguent des dispositifs connus de détection d'impulsions électromagnétiques.

Le but de l'invention est de fournir un procédé et un dispositif de détection d'un train d'impulsions électromagnétiques plus performant que les dispositifs actuels alliant à la fois un bon rapport signal sur bruit et une meilleure précision de la localisation spatiale de la cible identifiée par la tache résultant du train d'impulsions électromagnétiques ou de la direction de la cible et adaptés pour rechercher la fréquence d'émission du train d'impulsions électromagnétiques.

A cet effet, l'invention a pour objet un procédé de détection du type précité, caractérisé en ce qu'il comprend les étapes suivantes :
- calcul d'un signal d'accumulation pour chaque pixel, par l'unité de traitement, le signal d'accumulation étant la somme des signaux de soustraction espacés temporellement d'un décalage défini par la loi d'occurrence prédéfinie d'émission des impulsions électromagnétiques,
- seuillage par l'unité de traitement du signal d'accumulation pour chaque pixel, l'impulsion laser étant détectée si le signal d'accumulation est supérieur à un seuil prédéterminé pour au moins un pixel, et
- localisation de l'impulsion électromagnétique détectée dans la scène d'observation à partir des coordonnées du pixel comprenant l'impulsion électromagnétique détectée.

Suivant des modes particuliers de réalisation, le procédé de détection comporte l'une ou plusieurs des caractéristiques suivantes prises seules ou en combinaison :
- le détecteur matriciel est une matrice de capteurs adaptés pour réaliser une acquisition continue des signaux et le signal acquis pendant une fenêtre temporelle est le signal instantané à un instant donné de cette fenêtre temporelle ;
- le détecteur matriciel est une matrice de capteurs ayant un même temps d'intégration, les signaux acquis par le détecteur sur une fenêtre temporelle étant l'intégration dans le temps sur la fenêtre temporelle du signal instantané reçu par le capteur ;
- le signal d'accumulation est calculé pour toutes les fenêtres temporelles successives avec la même loi d'occurrence prédéfinie ;
- la loi d'occurrence prédéfinie est telle que les impulsions électromagnétiques sont émises avec une fréquence de répétition constante et le signal d'accumulation calculé pour chaque pixel est la somme des signaux de soustraction espacés temporellement d'un décalage sensiblement égale à un multiple entier de l'inverse de la fréquence de répétition des impulsions électromagnétiques ;
- la fréquence de répétition des impulsions électromagnétiques est sensiblement comprise entre 10 et 20 Hz ;
- le seuil prédéterminé correspond à un rapport signal sur bruit compris entre 7 et 14;
- le seuil prédéterminé est calculé à partir du bruit local dans les signaux acquis par le détecteur matriciel.

L'invention a également pour objet un système de détection d'un train d'impulsions électromagnétiques émises suivant une loi d'occurrence prédéfinie dans une scène d'observation comportant un détecteur matriciel de signaux et une unité de traitement des signaux connectés ensemble, les signaux comportant les impulsions électromagnétiques, l'unité de traitement étant adaptée à recevoir les signaux acquis et transmis par le détecteur matriciel et comprenant :
- des moyens de calcul d'un signal de soustraction pour chaque pixel du détecteur matriciel, le signal de soustraction étant la différence entre deux signaux acquis sur deux fenêtres temporelles consécutives de même longueur, ce calcul de soustraction étant réalisé pour toute paire de signaux consécutifs,
- des moyens de calcul d'un signal d'accumulation pour chaque pixel, le signal d'accumulation étant la somme des signaux de soustraction espacés temporellement d'un décalage défini par la loi d'occurrence prédéfinie d'émission des impulsions électromagnétiques, des moyens de seuillage du signal d'accumulation pour chaque pixel, l'impulsion laser étant détectée si le signal de soustraction est supérieur à un seuil prédéterminé pour au moins un pixel, et
- des moyens de localisation de l'impulsion électromagnétique détectée dans la scène d'observation à partir des coordonnées du pixel comprenant l'impulsion électromagnétique détectée, le système de détection étant adapté pour mettre en oeuvre le procédé précédent.

L'invention a également pour objet un dispositif de guidage électromagnétique d'une munition vers une cible, la cible étant identifiée par un train d'impulsions électromagnétiques, le dispositif étant caractérisé en ce qu'il comprend un système de détection d'un train d'impulsions électromagnétiques tel que décrit précédemment pour détecter et localiser un train d'impulsions électromagnétiques identifiant la cible, et des moyens de guidage de la munition vers la cible à partir de la détection du train d'impulsions électromagnétiques par le système de détection, le système de détection étant relié aux moyens de guidage et lui transmettant la localisation du train d'impulsions électromagnétiques détecté.

L'invention sera mieux comprise à la lecture de la description qui va suivre, donnée uniquement à titre d'exemple, et faite en se référant aux dessins, sur lesquels :
- la figure 1 est un schéma synoptique d'un exemple d'application d'un système de détection d'un train d'impulsions électromagnétiques selon l'invention,
- la figure 2 est un schéma synoptique d'un système de guidage d'une munition vers une cible comportant un système de détection d'un train d'impulsions électromagnétiques identifiant la cible selon l'invention,
- la figure 3 est un schéma synoptique illustrant le résultat d'une étape de soustraction entre deux images consécutives selon l'invention lorsque l'une des deux images comprend une image de l'impulsion électromagnétique ou non, et
- la figure 4 est un schéma synoptique d'un procédé de détection d'un train d'impulsions électromagnétiques mis en oeuvre par un système de détection selon l'invention.

L'invention concerne un système de détection d'un train d'impulsions électromagnétiques dans une scène d'observation destiné à être intégré à une plateforme aérienne, maritime ou terrestre tel qu'un avion, un hélicoptère, un drone, un blindé, un fantassin équipé de jumelles, un missile, une bombe, etc. Ce type de plateforme est destiné à la surveillance et/ou au combat.

La figure 1 illustre un exemple d'application d'un système de détection d'un train d'impulsions électromagnétiques selon l'invention. Celui-ci est destiné à être intégré à un dispositif de guidage laser d'une munition, par exemple un missile ou une bombe, vers une cible 2, la cible 2 étant identifiée par le train d'impulsions électromagnétiques.

La cible 2 est illuminée par un désignateur intégré dans un système optronique et comportant une source électromagnétique émettant un tel train d'impulsions électromagnétiques, de préférence une source laser.

La source d'émission des impulsions électromagnétiques opère de préférence en dehors du spectre visible afin d'être moins facilement repérée par l'ennemi.

La désignation par laser est mise en oeuvre par des troupes au sol, telles que le fantassin ou le char, ou l'avion tireur, on encore un autre avion, tout comme la munition guidée peut être guidée par laser, c'est-à-dire « en suivant » la tache laser, représentative du train d'impulsions électromagnétiques, détectée et larguée par le fantassin, le char ou l'avion.

Les impulsions électromagnétiques sont émises suivant une loi d'occurrence prédéfinie dans la scène d'observation en direction de la cible.

Par exemple, le désignateur laser illumine la cible avec un train d'impulsions électromagnétiques à une fréquence constante de quelques Hz d'occurrence. Chaque impulsion électromagnétique est très courte, par exemple de l'ordre de quelques dizaines de nanosecondes.

Un autre exemple consiste en des émissions des impulsions électromagnétiques à des intervalles de temps prédéterminés mais différents les uns des autres.

La figure 1 illustre un exemple d'application de l'invention dans lequel l'émetteur du train d'impulsions électromagnétiques est intégré aux jumelles 6 d'un fantassin 8, tandis que le système de détection du train d'impulsions électromagnétiques et le dispositif de guidage électromagnétique sont intégrés dans une plateforme terrestre 10, par exemple un char et/ou une plateforme aéroportée 12, telle qu'un avion de combat.

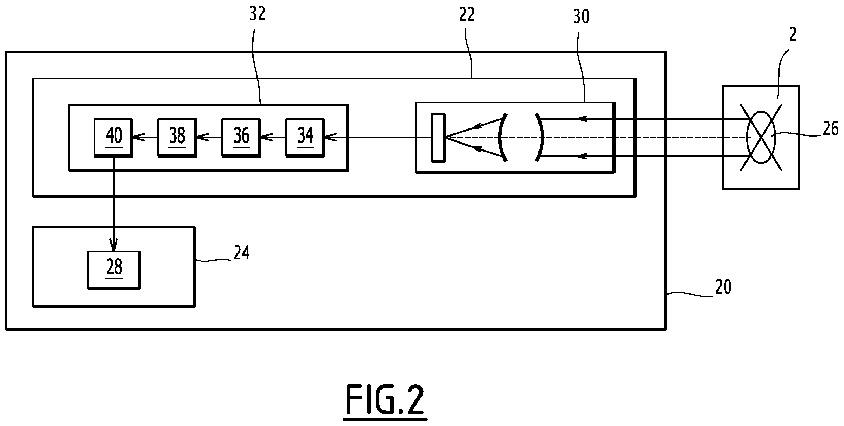

La figure 2 représente un dispositif de guidage électromagnétique 20, de préférence laser, comprenant un système de détection 22 d'un train d'impulsions électromagnétiques selon l'invention pour détecter et localiser un train d'impulsions électromagnétiques identifiant la cible 2.

En outre, le dispositif de guidage électromagnétique 20 comprend des moyens de guidage 24 d'une munition, par exemple un missile, vers la cible 2 à partir de la détection par le système de détection 22 de la tache ou spot d'illumination 26 résultant de l'illumination de la cible 2 par un émetteur de trains d'impulsions électromagnétiques.

Le système de détection 22 est relié aux moyens de guidage 24 et leur transmet la localisation de la cible à partir de la localisation du train d'impulsions électromagnétiques détecté, ou plus exactement de la tache d'illumination 26 détectée résultant de l'émission du train d'impulsions électromagnétiques vers la cible 2.

Les moyens de guidage 24 de la munition comportent des moyens d'asservissement 28 de la trajectoire de la munition sur le spot 26 détecté, la munition atteint alors la cible avec une haute précision.

Le système de détection 22 d'un train d'impulsions électromagnétiques selon l'invention comprend au moins un détecteur matriciel 30 de signaux représentatifs du train d'impulsions électromagnétiques et une unité de traitement 32 des signaux connectés ensemble. Bien entendu, les signaux comportent les impulsions électromagnétiques à détecter.

Selon un premier mode de réalisation du système de détection selon l'invention, le détecteur matriciel est une matrice de capteurs ayant un même temps d'intégration et une fréquence d'échantillonnage constante. Par conséquent, les signaux acquis par le détecteur sur une fenêtre temporelle sont le résultat de l'intégration dans le temps sur la fenêtre temporelle du signal instantané reçu par le capteur.

Par exemple, le détecteur matriciel est une matrice de 100 pixels x 100 pixels, et les signaux acquis par le détecteur forment des images.

L'unité de traitement 32 est adaptée pour recevoir les signaux acquis et transmis par le détecteur matriciel 30. Elle comporte des premiers moyens de calcul 34 d'un signal de soustraction pour chaque pixel du détecteur matriciel 30.

Le signal de soustraction est la différence entre deux signaux acquis sur deux fenêtres temporelles consécutives de même longueur, c'est-à-dire deux images consécutives.

L'unité de traitement 32 comporte en outre des seconds moyens de calculs 36 connectés aux premiers moyens de calculs 34 et adaptés pour calculer un signal d'accumulation pour chaque pixel. Le signal d'accumulation est la somme des signaux de soustraction espacés temporellement d'un décalage défini par la même loi prédéfinie d'émission des impulsions électromagnétiques.

De préférence, le système de détection est stabilisé afin que les impulsions électromagnétiques d'un même train d'impulsions soient positionnées dans un même pixel en vue du calcul d'accumulation.

Selon une variante, le système de détection comporte des moyens de recalage des signaux acquis par le détecteur matriciel en fonction d'informations inertielles du système de détection afin qu'au cours du calcul du signal d'accumulation, les signaux correspondant à des impulsions électromagnétiques d'un même train d'impulsions soient positionnés dans un même pixel. Le signal d'accumulation est calculé pour toutes les fenêtres temporelles successives avec la même loi prédéfinie. Ainsi, le signal d'accumulation est calculé même si les signaux de soustraction ne comportent pas d'impulsion électromagnétique.

De plus, l'unité de traitements 32 comprend des moyens de seuillage 38 du signal d'accumulation pour chaque pixel. Une impulsion électromagnétique est détectée si le signal d'accumulation est supérieur à un seuil prédéterminé pour au moins un pixel. Le seuil prédéterminé est de préférence calculé à partir du bruit local dans l'image pour au moins un pixel.

Les moyens de seuillage 38 sont connectés aux seconds moyens de calculs 36 et à des moyens de localisation 40 de l'impulsion électromagnétique détectée dans la scène d'observation à partir des coordonnées du pixel comprenant l'impulsion électromagnétique détectée. Ces moyens de localisation 40 sont intégrés à l'unité de traitement 32.

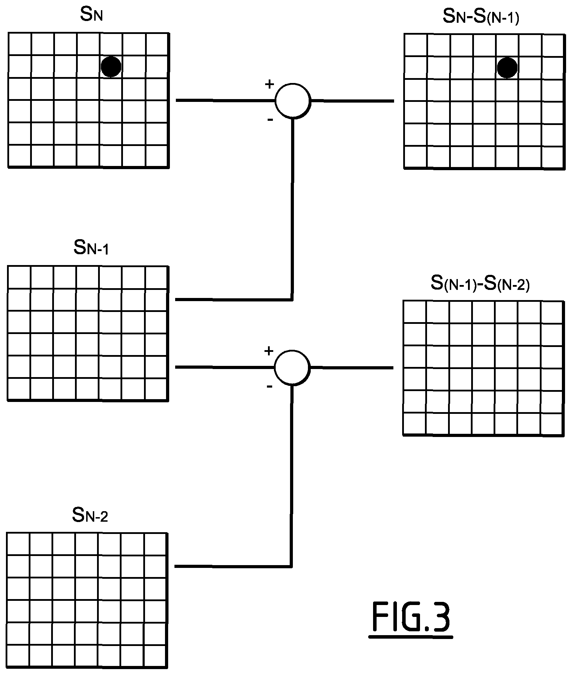

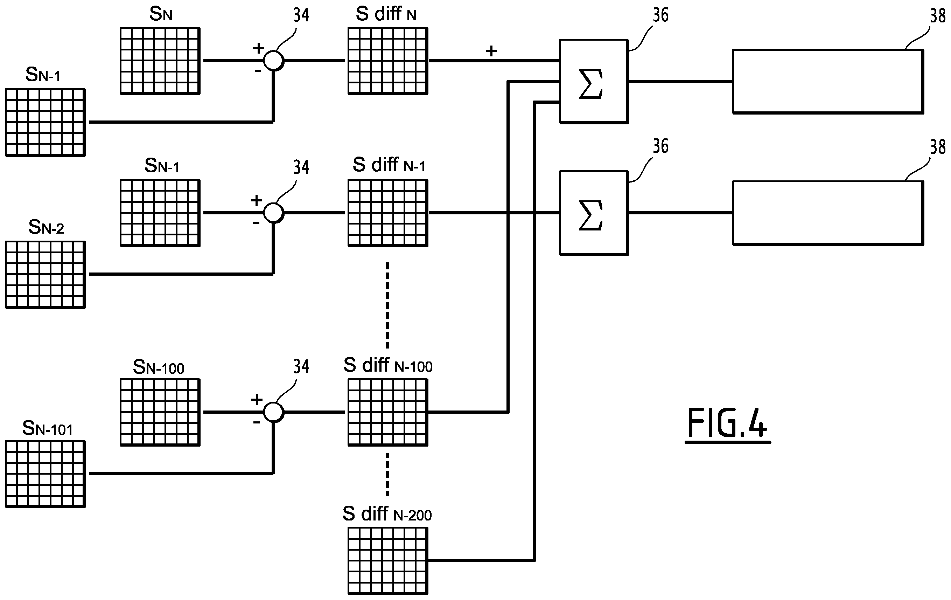

Le système de détection 22 selon l'invention met en oeuvre le procédé de détection d'un train d'impulsions électromagnétiques qui va maintenant être décrit en regard des figures 3 et 4.

Les impulsions électromagnétiques sont émises suivant une loi d'occurrence prédéfinie dans une scène d'observation.

De préférence, les impulsions électromagnétiques sont émises avec une fréquence de répétition sensiblement comprise entre 10 et 20 Hz.

Le procédé commence par l'acquisition par le détecteur matriciel 30 du système de détection 22 de signaux représentant des images de la cible dans la scène à une fréquence de prise d'images très supérieure à la fréquence d'émission des impulsions électromagnétiques.

Par exemple, le détecteur matriciel fonctionne à une cadence image sensiblement égale à 1 kHz, soit environ 100 fois plus élevée que la fréquence d'émission des impulsions électromagnétiques.

Bien entendu, certains des signaux acquis comportent les impulsions électromagnétiques à détecter.

Puis, le détecteur matriciel 30 transmet vers l'unité de traitement 32 du système de détection 22 les signaux ou images acquises.

Le procédé se poursuit par une étape de calcul par les premiers moyens de calculs 34 de l'unité de traitement 32 d'un signal de soustraction pour chaque pixel du détecteur matriciel 30.

Comme indiqué précédemment, ce signal de soustraction est la différence entre deux signaux acquis sur deux fenêtres temporelles consécutives de même longueur.

De préférence, les signaux acquis par le détecteur forment des images.

Le résultat de ce calcul est illustré sur la figure 3. Ainsi, le signal de soustraction calculé par l'unité de traitement, est une image résultant de la soustraction de l'intensité de l'image N-1 à l'intensité de l'image N, pixel par pixel.

Pour un signal ou une image N comprenant une impulsion à détecter, la soustraction de cette image N avec l'image précédente N-1, qui ne comprend pas cette impulsion donne une image ou signal de soustraction dans laquelle l'impulsion est toujours présente, contrairement au signal ou image de soustraction des images N-1 et N-2, ne contenant pas d'impulsion.

Ce calcul de soustraction est réalisé pour toute paire d'images ou de signaux consécutifs.

Comme représenté sur la figure 4, on obtient ainsi une pluralité de signaux de soustraction, ici des images de soustraction, notés Image diff N-i.

Le procédé se poursuit par une étape de calcul d'un signal d'accumulation pour chaque pixel, par les seconds moyens de calculs 36 de l'unité de traitement 32.

Le signal d'accumulation est la somme des signaux de soustraction espacés temporellement d'un décalage défini par la loi d'occurrence prédéfinie d'émission des impulsions électromagnétiques.

En particulier, pour une loi d'occurrence prédéfinie telle que les impulsions électromagnétiques sont émises avec une fréquence de répétition constante, le signal d'accumulation calculé pour chaque pixel est alors la somme des signaux de soustraction espacés temporellement d'un décalage égal à un multiple entier de l'inverse de la fréquence de répétition des impulsions électromagnétiques.

Par exemple, pour une cadence image d'environ 1 kHz et une fréquence de répétition des impulsions électromagnétiques de 10 Hz, une impulsion est présente toutes les 100 images acquises. Par conséquent en ne sommant que ces images, on augmente le rapport signal sur bruit et ainsi la fiabilité de détection des impulsions électromagnétiques.

Ensuite, une étape de seuillage par les moyens de seuillage 38 de l'unité de traitement 32 des signaux résultant de l'étape de calcul du signal d'accumulation pour chaque pixel est réalisée.

Une impulsion laser est alors détectée si le signal d'accumulation est supérieur à un seuil prédéterminé pour au moins un pixel. Le seuil prédéterminé est calculé à partir du bruit local dans l'image pour au moins un pixel. De préférence ce seuil prédéterminé correspond à un rapport signal sur bruit compris entre 7 et 14.

Enfin, le procédé se poursuit par une étape de localisation, par les moyens de localisation 40 de l'unité de traitement 32, de l'impulsion électromagnétique détectée dans la scène d'observation à partir des coordonnées du pixel comprenant l'impulsion électromagnétique détectée.

Selon un second mode de réalisation, le système de détection est identique à celui décrit précédemment à l'exception du détecteur matriciel qui est une matrice de capteurs adaptés pour réaliser une acquisition continue des signaux, par exemple, un détecteur à quadrants.

Dans ce cas, le signal acquis pendant une fenêtre temporelle est le signal instantané à un instant donné de cette fenêtre temporelle. Le signal continu est échantillonné à une haute fréquence d'échantillonnage, par exemple 1 ns, afin de repérer des évènements particuliers dans le signal, en particulier des impulsions de largeur sensiblement égale à 20 ns par exemple.

Ensuite, des trains d'échantillons sont construits, chacun ayant une durée définie par la loi d'occurrence recherchée. Par exemple, si la fréquence de répétition des impulsions recherchée est de 10 Hz, correspondant à une récurrence temporelle toutes les 100 ms, on construit un train dit « d'impulsion » comportant 10000000 échantillons afin que le train ait une durée de 10000000 x 1ns, soit 100 ms.

Par la suite, deux trains d'échantillons consécutifs sont soustraits pour former les signaux de soustraction. Puis, le signal d'accumulation est calculé en sommant les signaux de soustraction en phase par l'unité de traitements.

Le système de détection selon ce second mode de réalisation de l'invention met en oeuvre un procédé de détection identique au précédent. Ainsi, le dispositif et le procédé de détection d'un train d'impulsions électromagnétiques dans une scène selon l'invention permet de rendre plus performante la détection de ces impulsions électromagnétiques sans limiter le temps d'intégration.

Ce dispositif et ce procédé permettent avec des traitements simples, telle qu'une soustraction et une sommation, de détecter des impulsions électromagnétiques avec un faible rapport signal sur bruit et d'ainsi augmenter la portée de détection tout en gardant une très bonne localisation de l'impulsion électromagnétique.

En outre, un système de détection selon l'invention, stabilisé ou comportant des moyens de recalage des signaux acquis par le détecteur matriciel en fonction d'informations inertielles du système de détection afin qu'au cours du calcul du signal d'accumulation, les signaux correspondant à des impulsions électromagnétiques d'un même train d'impulsions soient positionnés dans un même pixel, améliore son efficacité de détection des trains d'impulsions électromagnétiques. En outre, le calcul du signal d'accumulation étant réalisé pour toutes les images, qu'elles comprennent ou non une impulsion électromagnétique, permet de détecter le train d'impulsions électromagnétiques même si l'origine temporelle d'émission du train d'impulsions électromagnétiques n'est pas connue.

Ces dispositif et procédé permettent en outre la recherche du code d'émission, c'est-à-dire la fréquence de répétition du train d'impulsions électromagnétiques.

En effet, si la fréquence de répétition du train d'impulsions électromagnétiques est différente de celle recherchée, les signaux de soustraction espacés temporellement du décalage défini par la loi d'occurrence recherchée ne sont pas en phase. Par conséquent, le rapport signal sur bruit du signal d'accumulation calculé sera atténué par cette étape d'accumulation au lieu d'être amplifié comme c'est le cas pour des signaux ayant une fréquence correspondant à la loi d'occurrence recherchée. Dans ce dernier cas, les signaux de soustractions espacés temporellement du décalage défini par la loi d'occurrence recherchée sont en phase, permettant ainsi d'augmenter le rapport signal sur bruit du signal d'accumulation calculé. Ainsi, ce procédé permet de faire la distinction entre plusieurs sources émettrices de codes différents.

## Revendications

1. Procédé de détection d'un train d'impulsions électromagnétiques émises suivant une loi d'occurrence prédéfinie dans une scène d'observation par un opérateur au moyen d'un système de détection (22) d'un train d'impulsions électromagnétiques comportant un détecteur matriciel (30) de signaux et une unité de traitement (32) des signaux, les signaux comportant les impulsions électromagnétiques, le procédé comprenant les étapes suivantes :
- acquisition des signaux par le détecteur matriciel (30)
- transmission des signaux du détecteur matriciel (30) vers l'unité de traitement (32),
- calcul par l'unité de traitement (32) d'un signal de soustraction pour chaque pixel du détecteur matriciel (30), le signal de soustraction étant la différence entre deux signaux acquis sur deux fenêtres temporelles consécutives de même longueur, ce calcul de soustraction étant réalisé pour toute paire de signaux consécutifs,
- calcul d'un signal d'accumulation pour chaque pixel, par l'unité de traitement (32), le signal d'accumulation étant la somme des signaux de soustraction espacés temporellement d'un décalage défini par la loi d'occurrence prédéfinie d'émission des impulsions électromagnétiques,
- seuillage par l'unité de traitement (32) du signal d'accumulation pour chaque pixel, l'impulsion laser étant détectée si le signal d'accumulation est supérieur à un seuil prédéterminé pour au moins un pixel, et
- localisation de l'impulsion électromagnétique détectée dans la scène d'observation à partir des coordonnées du pixel comprenant l'impulsion électromagnétique détectée.

2. Procédé de détection selon la revendication 1, **caractérisé en ce que** le détecteur matriciel (30) est une matrice de capteurs adaptés pour réaliser une acquisition continue des signaux et que le signal acquis pendant une fenêtre temporelle est le signal instantané à un instant donné de cette fenêtre temporelle.

3. Procédé de détection selon la revendication 1, **caractérisé en ce que** le détecteur matriciel (30) est une matrice de capteurs ayant un même temps d'intégration, les signaux acquis par le détecteur sur une fenêtre temporelle étant l'intégration dans le temps sur la fenêtre temporelle du signal instantané reçu par le capteur.

4. Procédé de détection selon l'une quelconque des revendications 1 à 3, **caractérisé en ce que** le signal d'accumulation est calculé pour toutes les fenêtres temporelles successives avec la même loi d'occurrence prédéfinie.

5. Procédé de détection selon l'une quelconque des revendications 1 à 4, **caractérisé en ce que** la loi d'occurrence prédéfinie est telle que les impulsions électromagnétiques sont émises avec une fréquence de répétition constante et **en ce que** le signal d'accumulation calculé pour chaque pixel est la somme des signaux de soustraction espacés temporellement d'un décalage sensiblement égale à un multiple entier de l'inverse de la fréquence de répétition des impulsions électromagnétiques.

6. Procédé de détection selon la revendication 5, **caractérisé en ce que** la fréquence de répétition des impulsions électromagnétiques est sensiblement comprise entre 10 et 20 Hz.

7. Procédé de détection selon l'une quelconque des revendications 1 à 6, **caractérisé en ce que** le seuil prédéterminé correspond à un rapport signal sur bruit compris entre 7 et 14.

8. Procédé de détection selon l'une quelconque des revendications 1 à 7, **caractérisé en ce que** le seuil prédéterminé est calculé à partir du bruit local dans les signaux acquis par le détecteur matriciel.

9. Système de détection (22) d'un train d'impulsions électromagnétiques émises suivant une loi d'occurrence prédéfinie dans une scène d'observation comportant un détecteur matriciel (30) de signaux et une unité de traitement (32) des signaux connectés ensemble, les signaux comportant les impulsions électromagnétiques, l'unité de traitement (32) étant adaptée à recevoir les signaux acquis et transmis par le détecteur matriciel (30) et comprenant :
- des moyens de calcul (34) d'un signal de soustraction pour chaque pixel du détecteur matriciel, le signal de soustraction étant la différence entre deux signaux acquis sur deux fenêtres temporelles consécutives de même longueur, ce calcul de soustraction étant réalisé pour toute paire de signaux consécutifs,
- des moyens de calcul (36) d'un signal d'accumulation pour chaque pixel, le signal d'accumulation étant la somme des signaux de soustraction espacés temporellement d'un décalage défini par la loi d'occurrence prédéfinie d'émission des impulsions électromagnétiques,
- des moyens de seuillage (38) du signal d'accumulation pour chaque pixel, l'impulsion laser étant détectée si le signal de soustraction est supérieur à un seuil prédéterminé pour au moins un pixel, et
- des moyens de localisation (40) de l'impulsion électromagnétique détectée dans la scène d'observation à partir des coordonnées du pixel comprenant l'impulsion électromagnétique détectée,
le système de détection (22) étant adapté pour mettre en oeuvre un procédé (100) selon l'une quelconque des revendications 1 à 8.

10. Dispositif de guidage électromagnétique (20) d'une munition vers une cible (2), la cible (2) étant identifiée par un train d'impulsions électromagnétiques, le dispositif (20) étant **caractérisé en ce qu'**il comprend un système de détection (22) d'un train d'impulsions électromagnétiques selon la revendication 9 pour détecter et localiser un train d'impulsions électromagnétiques identifiant la cible (20), et des moyens de guidage (24) de la munition vers la cible (2) à partir de la détection du train d'impulsions électromagnétiques par le système de détection (22), le système de détection (22) étant relié aux moyens de guidage (24) et lui transmettant la localisation du train d'impulsions électromagnétiques détecté.

## Patentansprüche

1. Verfahren zum Detektieren einer Folge von elektromagnetischen Pulsen, die gemäß einer vordefinierten Auftrittsregel in einer Beobachtungsszene ausgesendet werden, durch einen Benutzer mittels eines Systems (22) zum Detektieren einer Folge von elektromagnetischen Pulsen ausgesandt werden, aufweisend einen Matrixdetektor (30) für Signale und eine Verarbeitungseinheit für Signale (32), wobei die Signale die elektromagnetischen Pulse umfassen, wobei das Verfahren die folgenden Schritte umfasst:
- Erfassen der Signale durch den Matrixdetektor (30)
- Übertragen der Matrixdetektorsignale (30) an die Verarbeitungseinheit (32),
- Berechnen eines Subtraktionssignals für jedes Pixel des Matrixdetektors (30) durch die Verarbeitungseinheit (32), wobei das Subtraktionssignal die Differenz zwischen zwei Signalen ist, die in zwei aufeinanderfolgenden Zeitfenstern derselben Länge erfasst werden, wobei die Berechnung der Subtraktion für jedes Paar von aufeinanderfolgenden Signalen durchgeführt wird,
- Berechnen eines Akkumulationssignals für jedes Pixel durch die Verarbeitungseinheit (32), wobei das Akkumulationssignal die Summe der Subtraktionssignale ist, die zeitlich um einen Versatz beabstandet sind, der durch die vordefinierte Auftrittsregel der Emission der elektromagnetischen Pulse definiert ist,
- Schwellenwertvergleich durch die Verarbeitungseinheit (32) des Akkumulationssignals für jedes Pixel, wobei der Laserpuls detektiert wird, wenn das Akkumulationssignal für mindestens ein Pixel größer als ein vorbestimmter Schwellenwert ist, und
- Lokalisieren des detektierten elektromagnetischen Pulses in der Beobachtungsszene aus den Koordinaten des Pixels, der den detektierten elektromagnetischen Puls enthält.

2. Detektionsverfahren nach Anspruch 1, **dadurch gekennzeichnet, dass** der Matrixdetektor (30) eine Matrix von Sensoren ist, die eingerichtet sind, eine kontinuierliche Detektion der Signale durchzuführen und dass das während eines Zeitfensters erfasste Signal das Momentansignal zu einem durch dieses Zeitfenster gegebenen Zeitpunkts ist.

3. Detektionsverfahren nach Anspruch 1, **dadurch gekennzeichnet, dass** der Matrixdetektor (30) eine Matrix von Sensoren mit der gleichen Integrationszeit ist, wobei die von dem Detektor über ein Zeitfenster erfassten Signale die Integrale in der Zeit über die Zeitfenster des vom Sensor empfangenen augenblicklichen Signals sind.

4. Detektionsverfahren nach einem der Ansprüche 1 bis 3, **dadurch gekennzeichnet, dass** das Akkumulationssignal für alle aufeinanderfolgenden Zeitfenster mit der gleichen vordefinierten Auftrittsregel berechnet wird.

5. Detektionsverfahren nach einem der Ansprüche 1 bis 4, **dadurch gekennzeichnet, dass** die vordefinierte Auftrittsregel derart ist, dass die elektromagnetischen Pulse mit einer konstanten Wiederholfrequenz ausgesandt werden und dadurch, dass das Akkumulationssignal, das für jedes Pixel berechnet wird, die Summe der mit einem Versatz zeitlich beabstandeten Subtraktionssignale ist, der im Wesentlichen gleich einem ganzzahligen Vielfachen des Inversen der Wiederholungsfrequenz der elektromagnetischen Pulse ist.

6. Detektionsverfahren nach Anspruch 5, **dadurch gekennzeichnet, dass** die Wiederholfrequenz der elektromagnetischen Pulse im Wesentlichen zwischen 10 und 20 Hz liegt.

7. Detektionsverfahren nach einem der Ansprüche 1 bis 6, **dadurch gekennzeichnet, dass** der vorbestimmte Schwellenwert einem Signal-RauschVerhältnis zwischen 7 und 14 entspricht.

8. Detektionsverfahren nach einem der Ansprüche 1 bis 7, **dadurch gekennzeichnet, dass** der vorbestimmte Schwellwert aus dem lokalen Rauschen in den von dem Matrixdetektor erfassten Signalen berechnet wird.

9. System zum Detektieren (22) einer Folge elektromagnetischer Pulse, die gemäß einer vordefinierten Auftrittsregel in einer Beobachtungsszene ausgesendet werden, das einen Matrixdetektor (30) für Signale und eine Verarbeitungseinheit (32) von miteinander verbundenen Signalen aufweist, wobei die Signale die elektromagnetischen Pulse enthalten, wobei die Verarbeitungseinheit (32) eingerichtet ist, die von dem Matrixdetektor (30) erfassten und übertragenen Signale zu empfangen und aufweist:
- Mittel zum Berechnen (34) eines Subtraktionssignals für jedes Pixel des Matrixdetektors, wobei das Subtraktionssignal die Differenz zwischen zwei Signalen ist, die in zwei aufeinanderfolgenden Zeitfenstern gleicher Länge detektiert werden, wobei die Berechnung der Subtraktion für jedes Paar von aufeinanderfolgenden Signalen durchgeführt wird,
- Mittel zum Berechnen (36) eines Akkumulationssignal für jedes Pixel, wobei das Akkumulationssignal die Summe der Subtraktionssignale ist, die zeitlich um einen Versatz beabstandet sind, der durch die vordefinierte Auftrittsregel der Emission der elektromagnetischen Pulse definiert ist,
- Mittel zum Vergleichen (38) des Akkumulationssignals mit einem Schwellenwert für jedes Pixel, wobei der Laserpuls detektiert wird, wenn das Subtraktionssignal für mindestens ein Pixel größer als ein vorbestimmter Schwellenwert ist, und
- Mittel zum Lokalisieren (40) des in der Betrachtungsszene detektierten elektromagnetischen Pulses aus den Koordinaten des Pixels, der den detektierten elektromagnetischen Puls enthält,
wobei das Detektionssystem (22) dazu eingerichtet ist, ein Verfahren (100) nach einem der Ansprüche 1 bis 8 zu implementieren.

10. Vorrichtung zur elektromagnetischen Führung (20) einer Munition zu einem Ziel (2), wobei das Ziel (2) durch eine Folge von elektromagnetischen Pulsen identifiziert wird, wobei die Vorrichtung (20) **dadurch gekennzeichnet ist, dass** sie ein System zum Detektieren (22) einer Folge von elektromagnetischen Pulsen nach Anspruch 9 zum Detektieren und Lokalisieren einer das Ziel (20) identifizierenden elektromagnetischen Pulsfolge und Mittel (24) zum Führen der Munition in Richtung des Ziels (2) ausgehend von der Detektion der elektromagnetischen Pulsfolge durch das Detektionssystem (22) aufweist, wobei das Detektionssystem (22) mit den Führungsmitteln (24) verbunden ist und den Ort der detektierten elektromagnetischen Pulsfolge an sie überträgt.

## Claims

1. A method for detecting a stream of electromagnetic pulses, according to a predefined occurrence law, in a scene observed by an operator using a detection system (22) for detecting a stream of electromagnetic pulses including a matrix signal detector (30) and a processing unit (32) for processing the signals, the signals including the electromagnetic pulses, the method comprising the following steps:
- acquisition of signals by the matrix detector
- transmission of the signals from the matrix detector (30) to the processing unit (32),
- calculation, by the processing unit (32), of a subtraction signal for each pixel of the matrix detector (30), the subtraction signal being the difference between two signals acquired on two consecutive time windows of the same length, this subtraction calculation being performed for any pair of consecutive signals,
- calculating, using the processing unit (32), an accumulation signal for each pixel, spaced apart in time by an interval defined by the predefined occurrence law of the transmission of electromagnetic pulses, the accumulation signal being the sum of the subtraction signals,
- thresholding, using the processing unit (32), the accumulation signal for each pixel, the laser pulse being detected if the accumulation signal is above a predetermined threshold for at least one pixel, and
- locating the detected electromagnetic pulse in the observations seen from coordinates of the pixel comprising the detected electromagnetic pulse.

2. The detection method according to claim 1, **characterized in that** the matrix detector (30) is a matrix of sensors capable of performing a continuous acquisition of signals and the signal acquired during a time window is the instantaneous signal at a given moment of that time window.

3. The detection method according to claim 1, **characterized in that** the matrix detector (30) is a matrix of sensors having a same integration time, the signals acquired by the detector over one time window being the integration in time over the time window of the instantaneous signal received by the sensor.

4. The detection method according to any one of claims 1 to 3, **characterized in that** the accumulation signal is calculated for all of the successive time windows with the same predefined occurrence law.

5. The detection method according to any one of claims 1 to 4, **characterized in that** the predefined occurrence law is such that the electromagnetic pulses are transmitted with a constant repetition frequency and the accumulation signal calculated for each pixel is the sum of the subtraction signals spaced apart in time by an interval substantially equal to a whole multiple of the inverse of the repetition frequency of the electromagnetic pulses.

6. The detection method according to claim 5, **characterized in that** the repetition frequency of the electromagnetic pulses is substantially comprised between 10 and 20 Hz.

7. The detection method according to any one of claims 1 to 6, **characterized in that** the predetermined threshold corresponds to a signal-to-noise ratio comprised between 7 and 14.

8. The detection method according to any one of claims 1 to 7, **characterized in that** the predetermined threshold is calculated from the local noise in the signals acquired by the matrix detector.

9. A system (22) for detecting a flow of electromagnetic pulses transmitted according to a predefined occurrence law in an observation scene including a matrix signal detector (30) and a processing unit (32) for processing the signals connected to each other, the signals including the electromagnetic pulses, the processing unit (32) being capable of receiving the signals acquired and transmitted by the matrix detector (30) and comprising:
- means (34) for calculating a subtraction signal for each pixel of the matrix detector, the subtraction signal being the difference between two signals acquired on two consecutive time windows with the same length, this subtraction calculation being performed for any pair of consecutive signals,
- means (36) for calculating an accumulation signal for each pixel, the accumulation signal being the sum of the subtraction signals spaced apart in time by an interval defined by the predetermined occurrence law for the transmission of the electromagnetic pulses,
- means (38) for thresholding the accumulation signal for each pixel, the laser pulse being detected if the subtraction signal is greater than a predetermined threshold for at least one pixel, and
- means (40) for locating the detected electromagnetic pulse in the observation scene from the coordinates of the pixel comprising the detected electromagnetic pulse,
the detection system (22) being capable of implementing the method (100) according to any one of claims 1 to 8.

10. A device (20) for electromagnetically guiding ammunition toward a target (2), the target (2) being identified by a flow of electromagnetic pulses, the device (20) being **characterized in that** it comprises a system (22) for detecting a flow of electromagnetic pulses according to claim 9 to detect and locate a flow of electromagnetic pulses identifying the target (20), and means for guiding the ammunition (24) toward the target (2) from the detection of the flow of electromagnetic pulses by the detection system (22), the detection system (22) being connected to the guide means (24) and transmitting the location of the detected flow of electromagnetic pulses to it.
